Europäisches Patentamt

European Patent Office

Office européen des brevets

(11) Veröffentlichungsnummer: **0 150 310**
**A1**

## (12) EUROPÄISCHE PATENTANMELDUNG

(21) Anmeldenummer: **84114177.3**

(22) Anmeldetag: **23.11.84**

(51) Int. Cl.⁴: **A 63 H 31/00**

(30) Priorität: **28.01.84 DE 8402506 U**

(43) Veröffentlichungstag der Anmeldung: **07.08.85**
**Patentblatt 85/32**

(84) Benannte Vertragsstaaten: **AT BE CH DE FR GB IT LI LU NL SE**

(71) Anmelder: **Rüther, Hubert, Elbring 25, D-2105 Seevetal 8 bei Hamburg (DE)**

(72) Erfinder: **Rüther, Hubert, Elbring 25, D-2105 Seevetal 8 bei Hamburg (DE)**

(74) Vertreter: **Wolff, Michael, Dipl.-Phys., Kirchheimer Strasse 69, D-7000 Stuttgart 75 (DE)**

(54) **Steckverbinder mit Einrichtung zur Drehmomentübertragung.**

(57) Um einen Steckverbinder (1) mit zwei normalerweise Rohrenden aufnehmenden Stutzen (2), die fluchten oder rechtwinklig zueinander stehen und mit einem in einen Stutzendurchbruch (4) eingreifenden Verriegelungsstück (5) versehen sind, das normalerweise in einen Rohrdurchbruch eingreift und dadurch eine dreh- und zugfeste Verbindung von Stutzen (2) und Rohrende bewirkt, so einzurichten, daß über den Steckverbinder von einem Rohr (6) auf das andere Rohr (6') ein Drehmoment übertragen werden kann, das natürlich drehbar an den Stutzen (2) gelagerte Rohre (6 und 6') voraussetzt, wird vorgeschlagen, an jedem Stutzen (2) einen Drehkörper (7) zu lagern, der einen ihn axial sichernden Außenbund (8), der dazu mit dem Verriegelungsstück (5) zusammenwirkt, und eine außerhalb des zugeordneten Stutzens (2) liegende Muffe (9) aufweist, die drehfest mit einem Rohrende zu verbinden ist; und die zwei Drehkörper (7) mittels zweier an ihnen ausgebildeter Kegelräder (11) und/oder mittels einer, gegebenenfalls in die Kegelräder (11) gesteckter, Verbindungswelle (13) in drehfeste rechtwinklige bzw. geradlinige Antriebsverbindung zu bringen.

ACTORUM AG

## Steckverbinder mit Einrichtung zur Drehmomentübertragung

Die Erfindung betrifft einen Steckverbinder mit wenigstens zwei kolinearen und/oder rechtwinkligen kreiszylindrischen Stutzen an einem hohlen Ansatzteil, welche mit je mindestens einem radialen Wanddurchbruch versehen sind, in den ein Verriegelungsstück formschlüssig eingreift.

Bei einem aus der DE-GS 78 20 267 (Rüther) bekannten Steckverbinder dieser Art kann an jedem Stutzen ein Ende eines zu einem anderen Steckverbinder führenden Verbindungsrohres mit einem entsprechenden radialen Wanddurchbruch angesteckt werden, wobei die zwei Wanddurchbrüche zur Deckung bringbar sind und ein Knebel als Verriegelungsstück in die beiden zur Deckung gebrachten Wanddurchbrüche einsetzbar ist, sodaß der Verbinderstutzen und das angesteckte Rohrende in axialer Richtung und in Drehrichtung mittels des Knebels fest,aber voneinander lösbar miteinander verbindbar sind.

Der Erfindung liegt die Aufgabe zugrunde, einen Steckverbinder der eingangs genannten Art zur Drehmomentübertragung von einem drehbaren zylindrischen Verbindungsrohr, das an einen der zwei Verbinderstutzen angesetzt ist, auf ein anderes solches Rohr zu schaffen, sodaß aus Steckverbindern und Verbindungsrohren nicht nur starre Gebilde, wie Gerüste, sondern auch teilweise bewegliche Gebilde, wie Fahrzeuge, gebaut werden können, und zwar auch von Kindern ohne tieferes technisches Verständnis.

Diese Aufgabe ist bei einem Steckverbinder der eingangs genannten Art erfindungsgemäß dadurch gelöst, daß zur Drehmomentübertragung von einem drehbaren zylindrischen Verbindungsrohr, das an einen der zwei Stutzen angesetzt ist, auf ein anderes solches Rohr, das an den anderen der beiden Stutzen angesetzt ist, in jedem dieser Stutzen ein koaxialer Drehkörper drehbar gelagert ist, welcher einen Außenbund , an dem das Verriegelungsstück, den Austritt des Drehkörpers aus dem ihm zugeordneten Stutzen sperrend, axial angreift, und eine außerhalb dieses Stutzens liegende Muffe zur drehfesten Verbindung des Drehkörpers mit dem ihm zugeordneten Verbindungsrohr aufweist; und daß jeder Drehkörper an seinem muffenfernen Ende ein Kegelrad aufweist, das mit dem Kegelrad des anderen Drehkörpers ein Winkelgetriebe bildet,

0150310

- 2 -

und/oder einen axialen zylindrischen Hohlraum     mit von der
Kreisform abweichendem, vorzugsweise quadratischem, Querschnitt
aufweist, in welchen eine kolineare Verbindungswelle mit einem
ihrer zwei passend geformten Enden drehfest eingreift, von denen
das andere Ende in den Hohlraum des anderen Drehkörpers eingreift.
Diese Weiterbildung des bekannten Steckverbinders stellt vorteilhafterweise eine Einrichtung dar, mittels deren ein Drehmoment
von einem in Drehrichtung angetriebenen Verbindungsrohr zu einem
anderen in Drehrichtung antreibbaren Verbindungsrohr mittels
des Steckverbinders nach der Erfindung übertragbar ist, was sowohl für gleichgerichtete Verbindungsrohre als auch für rechtwinklig angeordnete Verbindungsrohre gilt. Dabei kann die, die
Drehmomentübertragung bewirkende, drehfeste Verbindung der zwei
Drehkörper in den Verbinderstutzen in beiden zuvor genannten
Fällen wahlweise hergestellt oder dadurch aufgehoben werden,
daß die einander benachbarten Enden der beiden Drehkörper auseinander gerückt und mittels je eines Verriegelungsstückes axial
fixiert werden.

Bei einer bevorzugten Ausführungsform des erfindungsgemäßen Steckverbinders, bei welcher jeder Drehkörper sowohl ein Kegelrad
als auch einen Hohlraum zum Einsetzen einer Verbindungswelle
aufweist, ist vorgesehen, daß die Kegelräder verzahnt sind und
zur Drehmomentübertragung miteinander kämmen, sodaß dabei ein
Schlupf nicht auftreten kann, wie bei Reibrädern beispielsweise.
Bei der bevorzugten Ausführungsform besteht die Verbindungswelle aus einem massiven, vorzugsweise kreiszylindrischen,Stab,
dessen beide Enden verjüngt sind und selbstverständlich eine
der Form des Hohlraums angepaßte Gestalt aufweisen müssen.
Bei der bevorzugten Ausführungsform weist jeder Drehkörper,
wie gesagt, sowohl ein Kegelrad als auch einen Hohlraum auf,
der vorteilhafterweise im Kegelrad ausgeformt ist, sodaß die
geradlinige wie die umlenkende Drehmomentübertragung wahlweise
möglich sind.
Bei der bevorzugten Ausführungsform sind die Drehkörper hohl,

wodurch nicht nur eine Material- und Gewichtseinsparung, sondern auch eine erhöhte Stabilität der Drehverbindung erreicht wird.

Bei der bevorzugten Ausführungsform ist der zylindrische Hohlraum zur Aufnahme eines Endes der Verbindungswelle ein axialer Durchbruch von außen in den Hohlraum des Drehkörpers. Dieser einfach zu erzeugende Durchbruch läßt ein axiales Spiel des Wellenendes ohne weiteres zu.

Bei der bevorzugten Ausführungsform weist das Verriegelungsstück eine kreisbogenförmige Nut für den Eingriff des Außenbundes eines Drehkörpers auf, sodaß dieser zwar axial festgelegt, jedoch gleichzeitig drehbar ist.

Bei der bevorzugten Ausführungsform weist jeder Drehkörper mit Kegelrad mindestens zwei parallele Außenbünde zwischen der Muffe und dem Kegelrad auf und weist das diesem Drehkörper zugeordnete Verriegelungsstück parallele Stirnlinien auf, wobei von den beiden Außenbünden wahlweise jeweils einer in die Nut des Verriegelungsstückes eingreift. Damit ist die axiale Fixierung jedes Drehkörpers in jeder von zwei Positionen gewährleistet, in denen jeder Drehkörper entweder mittels der Kegelräder oder mittels der Verbindungswelle mit dem anderen Drehkörper in oder außer Drehverbindung steht.

Bei der bevorzugten Ausführungsform sitzt auf dem Stutzen, zur Abdeckung des Verriegelungsstückes radial von außen, eine Distanzhülse, die axial am Ansatzteil und an der Stirnfläche des auf der Muffe sitzenden Endes des Verbindungsrohres anschlägt, welches um die Länge der Hülse gekürzt ist. Die Distanzhülse sorgt einerseits dafür, daß das Verriegelungsstück auch ohne radiale Festlegung nicht verloren geht und erlaubt andererseits die Erzeugung und Verwendung von Verbindungsrohren, deren radiale Wanddurchbrüche an jedem Rohrende einen und denselben Abstand von dessen axialer Stirnfläche aufweisen, und zwar unabhängig von der Rohrlänge.

Bei der bevorzugten Ausführungsform ist zur drehfesten Verbindung der Muffe des Drehkörpers mit dem an ihr steckenden Ende des Verbindungsrohres ein Knebel gemäß DE-GS 78 20 267 vorgesehen, der in zwei sich radial deckende Wanddurchbrüche in der

Muffe bzw. dem Rohrende formschlüssig lösbar eingreift; und weist die Muffe oder das Rohrende zwei, gegebenenfalls in Umfangsrichtung versetzte, solche Wanddurchbrüche auf, deren axialer Abstand dem Abstand der zwei Außenbünde des Drehkörpers entspricht. Der bewährte Knebel erlaubt eine schnelle und sichere Verbindungsherstellung und -lösung, wobei die Durchbruchspaare dem Verwender die drehfeste Verbindung von Drehkörper und Verbindungsrohr in jedem Zustand der Einrichtung zur Drehmomentübertragung vom einen Drehkörper auf den anderen ermöglichen.

Falls zur Drehmomentübertragung von einer Kurbel, die an einem der zwei Stutzen des erfindungsgemäßen Steckverbinders angesetzt ist, ein Kurbelteil das verbindernahe Ende des einen Verbindungsrohres ersetzt und wie dieses Rohrende ausgebildet ist, kann die bevorzugte Ausführungsform auch zur Einleitung eines Drehmomentes in das andere Verbindungsrohr mittels einer Handkurbel verwendet werden.

Im folgenden ist die Erfindung anhand der durch die Zeichnung beispielhaft dargestellten bevorzugten Ausführungsform des erfindungsgemäßen Steckverbinders in Verbindung mit Rohren und Kurbel im einzelnen erläutert. Es zeigt:

Fig. 1     einen zentralen Längsschnitt durch die Ausführungsform mit drei Verbinderstutzen und dementsprechend drei abgebrochen dargestellten Verbindungsrohren;

Fig. 2a    einen zentralen Längsschnitt durch einen Drehkörper der Ausführungsform als Ausschnitt aus Fig. 1;

Fig. 2b    eine Stirnansicht eines Kegelrades dieses Drehkörpers;

Fig. 3   a  einen zentralen Querschnitt, b  einen zentralen Längsschnitt und c  eine Draufsicht auf ein Verriegelungsstück der Ausführungsform;

Fig. 4 a   einen zentralen Längsschnitt durch eine Handkurbel zur Verwendung in Verbindung mit der Ausführungsform;

Fig. 4b    eine Stirnansicht dieser Kurbel.

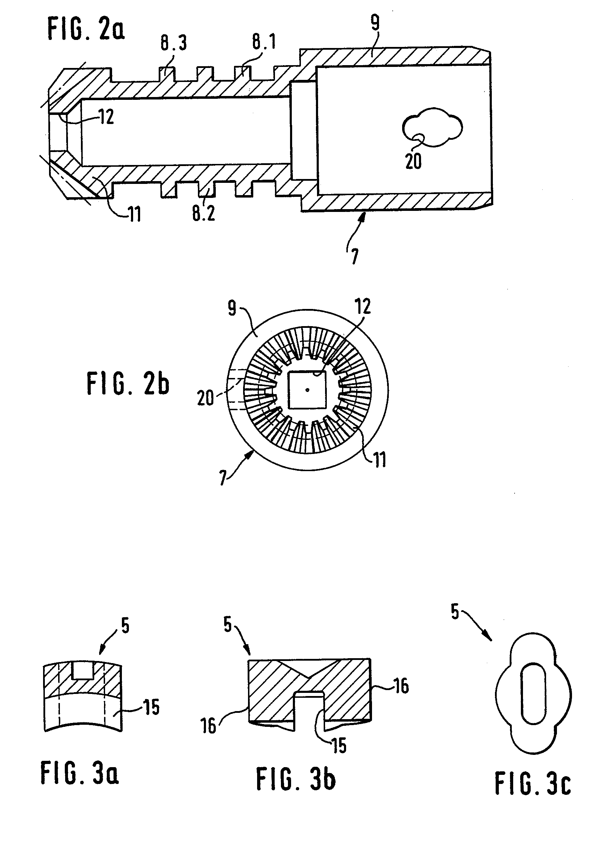

Der eigentliche Steckverbinder 1 ist in der aus der DE-GS 78 20 267 bekannten Weise ausgestaltet und weist dementsprechend drei im Ausführungsbeispiel in einer und derselben Ebene liegende kreiszylindrische Stutzen 2 auf, von denen zwei geradlinig und der dritte rechtwinklig zu jedem der beiden anderen Stutzen angeordnet ist. Alle drei Stutzen 2 sind an ein zentrales hohles Ansatzteil 3 angeformt, das die Hohlräume der drei Stutzen glatt ineinander übergehen läßt. Jeder Stutzen 2 weist mindestens einen radialen Wanddurchbruch 4 zur Aufnahme eines Verriegelungsstückes 5 gemäß Fig. 3 auf. Die Wanddurchbrüche 4 und die Verriegelungsstücke 5 besitzen dementsprechend bei radialer Projektion einen und denselben Grundriß in Gestalt eines Doppelbart-Schlüssel= loches bzw. -Schlüssels am Bartende.

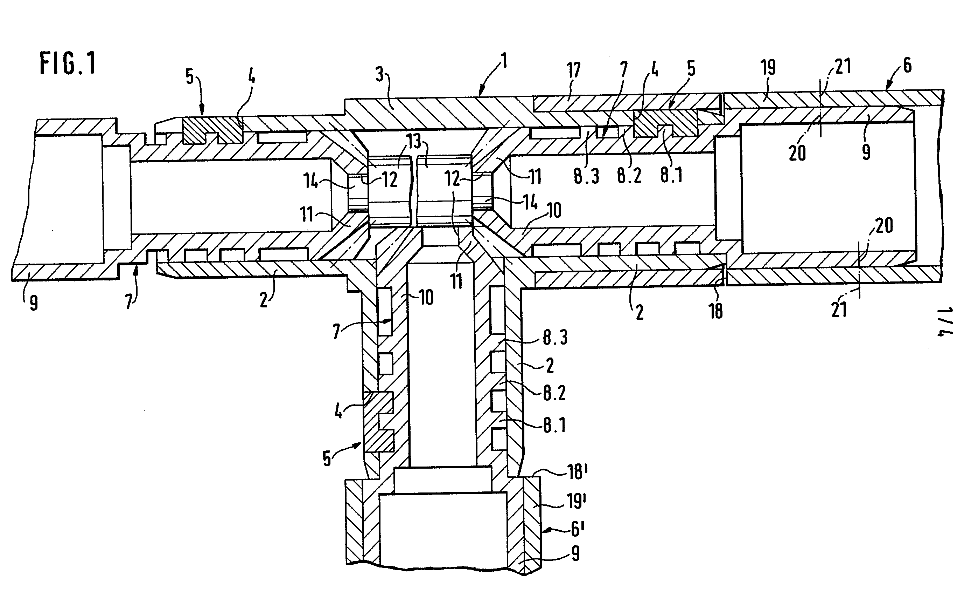

Ein erstes kreiszylindrisches Verbindungsrohr 6 und ein zweites kreiszylindrisches Verbindungsrohr 6' besitzen einen Innendurchmesser, der dem Außendurchmesser der Verbinderstutzen 2 angepaßt

191184

ist, sodaß die in Fig. 1 gezeigten Rohrenden auf die Stutzen über die radial aus diesen nicht hervorragenden Verriegelungsstücke 5 bis zum Anschlag am Ansatzteil 3 geschoben werden können.

In jedem der drei Stutzen 2 ist ein größtenteils kreiszylindrischer Drehkörper 7 drehbar und axial geführt gelagert. Jeder der drei langgestreckten hohlen Drehkörper 7 weist drei äquidistante Außenbünde 8, eine radial erweiterte, in das benachbarte Ende des zugeordneten Verbindungsrohres 6 bzw. 6' eingreifende kreiszylindrische Muffe 9, ein je nach axialer Anordnung des Drehkörpers im oder am Ansatzteil 3 liegendes Ende 10 mit einem außenverzahnten Kegelrad 11 und einem Hohlraum 12 auf, der in der Mitte des Kegelrades als auf der Längsachse des Drehkörpers liegender quadratischer Durchbruch ins Innere des Drehkörpers ausgebildet ist. In den Hohlraum 12 eines Drehkörpers 7 mit im Ansatzteil 3 befindlichem Ende 10 greift eine stabförmige Verbindungswelle 13 mit ihrem einen quadratischen Ende 14 ein, deren anderes quadratisches Ende 14 im Hohlraum 12 des im Ansatzteil 3 befindlichen Kegelrades 11 des kolinearen Drehkörpers 7 steckt. Der Durchmesser der Verbindungswelle 13 ist so bemessen, daß er die Anordnung des mit einem der beiden Kegelräder 11 der kolinearen Drehkörper 7 kämmenden Kegelrades 11 des dritten Drehkörpers 7, wie in Fig. 1 gezeigt, nicht stört. Die Anordnung ist hier so getroffen, daß bei einem Drehkörper das Verriegelungsstück 5 den axial äußeren Außenbund 8.1 axial festlegt, während bei dem koaxialen Drehkörper 7 das Verriegelungsstück 5 den mittleren Außenbund 8 erfaßt und beim querliegenden Drehkörper 7 wiederum der axial äußere Außenbund 8.1 durch das Verriegelungsstück 5 axial fixiert ist. Jeder der Drehkörper 7 kann aber soweit vom Ansatzteil 3 weggezogen werden, daß der axial innere Außenbund 8.3 vom Verriegelungsstück 5 axial festgehalten wird, womit sowohl die geradlinige Drehmomentübertragung mittels der Verbindungswelle 13 als auch die rechtwinklige Drehmomentübertragung mittels der beiden kämmenden Kegelräder 11 aufgehoben wäre. Die Aufhebung der geradlinigen Drehmomentübertragung kommt schon zustande, wenn nur einer der beiden kolinearen Drehkörper 7 um den Abstand zweier einander benachbarter Außenbünde 8 axial versetzt würde, weil dieser Abstand bereits größer ist als die axiale Länge der Wellenenden 14.

Jedes Verriegelungsstück 5 weist eine quer zu seiner Längserstreckung mittig angeordnete, kreisbogenförmige Nut 15 auf, deren in parallelen Ebenen liegende Flanken an den einander abgekehrten axialen Stirnflächen eines Außenbundes 8 eines Drehkörpers 7 mit axialem Spiel anliegen, um den Drehkörper mit drei Außenbünden in einer von drei axialen Positionen festzulegen. Zwei parallele Stirnlinien 15 an jedem Verriegelungsstück 5, welche die Längsachse des damit belegten Verbinderstutzens 2 senkrecht schneiden, befinden sich in einem senkrechten Abstand voneinander, der dem lichten axialen Abstand des axial äußeren Außenbundes 8.1 vom axial innern Außenbund 8.3 des Drehkörpers entspricht.

Auf jedem Verbinderstutzen 2, der über einen Drehkörper 7 mittels eines Verriegelungsstückes 5 und eines Knebels gemäß DE-GS 78 20 267 mit einem der axial versetzten Verbindungsrohre 6 und 6' indirekt verbunden ist, sitzt zur Abdeckung des Verriegelungsstückes 5 radial von außen eine Distanzhülse 17, die axial am Ansatzteil 3 und an der Stirnfläche 18 des auf der Muffe 9 des koaxialen Drehkörpers 7 sitzenden Endes 19 des Verbindungsrohres anschlägt. Die um je eine Distanzhülse 17 verlängerten Verbindungsrohre 6 und 6' sind im Vergleich mit Verbindungsrohren, die sich bis zum Ansatzteil 3 des Steckverbinders 1 erstrecken würden, gerade um die Hülsenlänge gekürzt.

In jeder Muffe 9 eines Drehkörpers 7 sind zwei in Umfangsrichtung gegeneinander versetzte Wanddurchbrüche 20 in einem bestimmten axialen Abstand voneinander vorgesehen, denen zwei sie deckende Wanddurchbrüche 21 in dem auf die Muffe geschobenen Rohrende 19 entsprechen, sodaß mittels eines oder zweier Knebel gemäß DE-GS 78 20 267 eine formschlüssige, drehfeste Verbindung zwischen Rohrende 19 und Muffe 9 herstellbar und lösbar ist. Von den je zwei Wanddurchbrüchen 20 und 21 muß nur ein Wanddurchbruch 20 oder 21 vorhanden sein. Der axiale Abstand der

.0150310

zwei Wanddurchbrüche 20 oder 21 voneinander entspricht dem axialen Abstand des mittleren Außenbundes 8.2 des Drehkörpers 7 von dessen axial äußerem Außenbund 8.1. Infolgedessen kann das aus zwei miteinander kämmenden Kegelrädern 11 gebildete Winkelgetriebe dadurch aufgehoben werden, daß einer der die Kegelräder aufweisenden Drehkörper 7 um den zuvor genannten Abstand vom Ansatzteil 3 axial entfernt wird, bis ein anderer der beiden Wanddurchbrüche 20 oder 21 mit dem einzelnen Wanddurchbruch 21 bzw. 20 zur radialen Deckung gelangt.

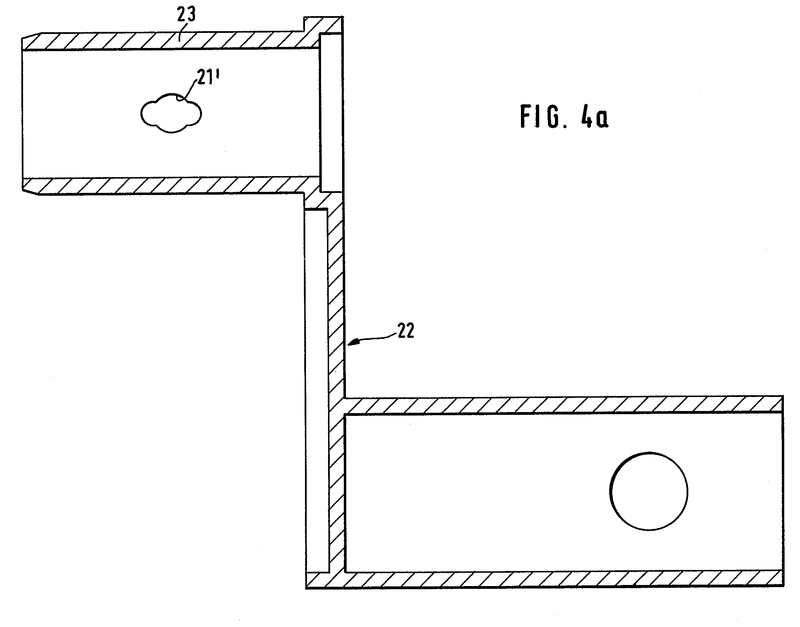

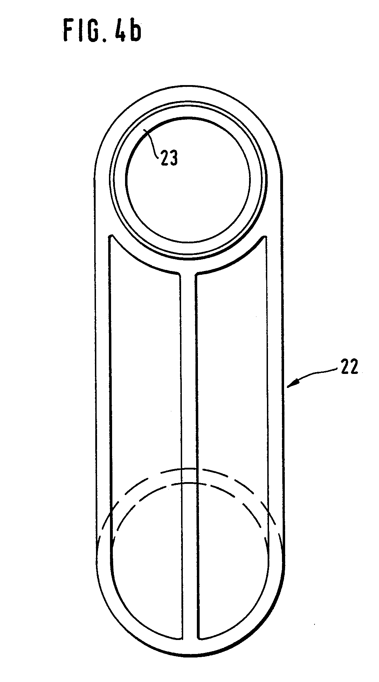

Eine gemäß Fig. 4 und 5 gestaltete Kurbel 22 weist einen rohrförmigen Teil 23 auf, der dem Rohrende 19 oder 19' des Verbindungsrohres 6 bzw. 6' entspricht und deshalb anstelle des Rohrendes auf die Muffe 9 eines Drehkörpers 7 gesteckt und mittels eines Knebels gemäß DE-GS 78 20 267 lösbar an der Muffe befestigt werden kann, wobei ein den Wanddurchbrüchen 21 entsprechender Wanddurchbruch 21' im Kurbelteil 23 verwendbar ist. Durch Erfassen des anderen Kurbelendes und durch dessen Herumführen um die Achse des angeschlossenen Drehkörpers 7 rotiert dieser ebenso wie bei der Drehung eines statt der Kurbel 22 angeschlossenen Verbindungsrohres um dessen Längsachse.

- . -

ı

Reg.-Nr.200107

Dipl.-Ing.
Hubert RÜTHER in Seevetal 8

Steckverbinder
mit Einrichtung zur Drehmomentübertragung

19. Mai 1984/H

P a t e n t a n s p r ü c h e

1) Steckverbinder (1) mit wenigstens zwei kolinearen und/oder rechtwinkligen kreiszylindrischen Stutzen (2) an einem hohlen Ansatzteil (3), welche mit je mindestens einem radialen Wanddurchbruch (4) versehen sind, in den ein Verriegelungsstück (5) formschlüssig eingreift, dadurch gekennzeichnet, daß zur Drehmomentübertragung von einem drehbaren zylindrischen Verbindungsrohr (6), das an einen der zwei Stutzen (2) angesetzt ist, auf ein anderes solches Rohr (6'), das an den anderen der beiden Stutzen (2) angesetzt ist, in jedem dieser Stutzen (2) ein koaxialer Drehkörper (7) drehbar gelagert ist, welcher einen Außenbund (8), an dem das Verriegelungsstück (5), den Austritt des Drehkörpers (7) aus dem ihm zugeordneten Stutzen (2) sperrend, axial angreift, und eine außerhalb dieses Stutzens (2) liegende Muffe (9) zur drehfesten Verbindung des Drehkörpers (7) mit dem ihm zugeordneten Verbindungsrohr (6) aufweist; und daß jeder Drehkörper (7) an seinem muffenfernen Ende (10) ein Kegelrad (11) aufweist, das mit dem Kegelrad (11) des anderen Drehkörpers (7) ein Winkelgetriebe bildet, und/oder einen axialen zylindrischen Hohlraum (12) mit von der Kreisform abweichendem, vorzugsweise

191184

quadratischem, Querschnitt aufweist, in welchen eine kolineare Verbindungswelle (13) mit einem ihrer zwei passend geformten Enden (14) drehfest eingreift, von denen das andere Ende (14) in den Hohlraum (12) des anderen Drehkörpers (7) eingreift.

2) Steckverbinder (1) nach Anspruch 1, dadurch gekennzeichnet, daß die Kegelräder (11) verzahnt sind und zur Drehmomentübertragung miteinander kämmen.

3) Steckverbinder (1) nach Anspruch 1 oder 2, dadurch gekennzeichnet, daß die Verbindungswelle (13) aus einem massiven, vorzugsweise kreiszylindrischen, Stab (13) besteht, dessen beide Enden (14) verjüngt sind.

4) Steckverbinder (1) nach einem der Ansprüche 1 bis 3, dadurch gekennzeichnet, daß jeder Drehkörper (7) sowohl ein Kegelrad (11) als auch einen Hohlraum (12) aufweist, der im Kegelrad (11) ausgeformt ist.

5) Steckverbinder (1) nach einem der Ansprüche 1 bis 4, dadurch gekennzeichnet, daß die Drehkörper (7) hohl sind.

6) Steckverbinder (1) nach Anspruch 5, dadurch gekennzeichnet, daß der zylindrische Hohlraum (12) zur Aufnahme eines Endes (14) der Verbindungswelle (13) ein axialer Durchbruch ist.

7) Steckverbinder (1) nach einem der Ansprüche 1 bis 6, dadurch gekennzeichnet, daß das Verriegelungsstück (5) eine kreisbogenförmige Nut (15) für den Eingriff des Außenbundes (8) eines Drehkörpers (7) aufweist.

8) Steckverbinder (1) nach Anspruch 7, dadurch gekennzeichnet, daß jeder Drehkörper (7) mit Kegelrad (11) mindestens zwei parallele Außenbünde (8) zwischen der Muffe (9) und dem Kegelrad (11) aufweist und daß das diesem Drehkörper (7) zugeordnete Verriegelungsstück (5) parallele Stirnlinien (16) aufweist, wobei von den beiden Außenbünden (8) wahlweise jeweils einer in die Nut (15) des Verriegelungsstückes (5) eingreift.

9) Steckverbinder (1) nach einem der Ansprüche 1 bis 8, dadurch gekennzeichnet, daß auf dem Stutzen (2), zur Abdeckung des Verriegelungsstückes (5) radial von außen, eine Distanzhülse (17) sitzt, die axial am Ansatzteil (3) und an der Stirnfläche (18) des auf der Muffe (9) sitzenden Endes (19) des Verbindungsrohres (6) anschlägt, welches um die Länge der Hülse (17) gekürzt ist.

10) Steckverbinder (1) nach Anspruch 8 oder 9, dadurch gekennzeichnet, daß zur drehfesten Verbindung der Muffe (9) des Drehkörpers (7) mit dem an ihr steckenden Ende (19) des Verbindungsrohres (6) ein Knebel (Fig. 3) vorgesehen ist, der in zwei sich radial deckende Wanddurchbrüche (20, 21) in der Muffe (9) bzw. dem Rohrende (19) formschlüssig lösbar eingreift; und daß die Muffe (9) oder das Rohrende (19) zwei, gegebenenfalls in Umfangsrichtung versetzte, solche Wanddurchbrüche (20, 21) aufweist, deren axialer Abstand dem Abstand der zwei Außenbünde (8.1, 8.2) des Drehkörpers (7) entspricht.

11) Steckverbinder (1) nach einem der Ansprüche 1 bis 10, dadurch gekennzeichnet, daß zur Drehmomentübertragung von einer Kurbel (22), die an einen der zwei Stutzen (2) angesetzt ist, ein Kurbelteil (23) das verbindernahe Ende (19) des einen Verbindungsrohres (6) ersetzt und wie dieses Rohrende (19) ausgebildet ist.

FIG.1

1/4

0150310

FIG. 2a

8.3  8.1  9

12

20

11  8.2  7

FIG. 2b

9  12

20

7  11

FIG. 3a

5

15

FIG. 3b

5

16

16  15

FIG. 3c

5

FIG. 4a

FIG. 4b

23

22

0150310

Europäisches
Patentamt

**EUROPÄISCHER RECHERCHENBERICHT**

Nummer der Anmeldung

EP 84 11 4177

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-8 320 554 (WESENFELD, DICKE & CO.) * Figur 1, Positionen 11,9d * | 1,2 | A 63 H 31/00 |
| Y | DE-C- 805 249 (ERNST) * Figur 1, Position L * | 1,2 | |
| Y | FR-A-1 580 588 (FISCHER) * Figur 1, Position 9 * | 2,3 | |
| A | | 6 | |
| Y | BE-A- 691 222 (SCHWEIZERISCHE LOKOMOTIV- U. MASCHINENFABRIK) * Figur 8 * | 1 | |
| Y | US-A-2 032 966 (YOXALL) * Figur 1 * | 1,2 | **RECHERCHIERTE SACHGEBIETE (Int. Cl.4)**  A 63 H 31/00 |
| A,D | DE-U-7 820 267 (RÜTHER) * Figuren 1,2 * | 1,6,10 | |

Der vorliegende Recherchenbericht wurde für alle Patentansprüche erstellt.

| Recherchenort BERLIN | Abschlußdatum der Recherche 04-04-1985 | Prüfer ZAPP E |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82